# EUROPÄISCHE PATENTSCHRIFT

(11) **EP 2 378 312 B1**
(45) Veröffentlichungstag und Bekanntmachung des Hinweises auf die Patenterteilung: **20.09.2017**
(21) Anmeldenummer: 10159755.7
(22) Anmeldetag: 13.04.2010
(51) Int. Cl.: G01T 1/17, G01F 23/288, G01F 25/00, G01N 23/06

(54) **Diagnose von radiometrischen Detektoren**
Diagnosis of radiometric detectors
Diagnostic de détecteurs radiométriques

(43) Veröffentlichungstag der Anmeldung: 19.10.2011
(60) Teilanmeldung: 17180952.8
(73) Patentinhaber: VEGA Grieshaber KG, 77709 Wolfach (DE)
(72) Erfinder: RAUER, Winfried, 77716 Fischerbach (DE); FEHRENBACH, Josef, 77716 Haslach (DE); KÖRNLE, Ralf, 77736 Zell a. H. (DE)
(74) Vertreter: Maiwald Patentanwalts GmbH

(56) Entgegenhaltungen:
- DE-A1- 10 048 559
- DE-A1- 19 711 124
- DE-C1- 4 114 030

## Beschreibung

### Gebiet der Erfindung

Die Erfindung betrifft die radiometrische Füllstandmessung, die radiometrische Dichtemessung und die radiometrische Durchsatzmessung. Insbesondere betrifft die Erfindung eine Diagnoseeinrichtung für einen radiometrischen Detektor, insbesondere für einen radiometrischen Füllstanddetektor, einen radiometrischen Dichtedetektor und/oder einen radiometrischen Durchsatzdetektor. Weiterhin betrifft die Erfindung ein radiometrisches Füllstandmessgerät mit einer Diagnoseeinrichtung, ein radiometrisches Dichtemessgerät mit einer Diagnoseeinrichtung und ein radiometrisches Durchsatzmessgerät mit einer Diagnoseeinrichtung, sowie ein Verfahren zur Diagnose von einem radiometrischen Detektor.

### Technologischer Hintergrund

Radiometrische Messgeräte verwenden einen Komparator, um Pulse zu zählen. Verstärkungsänderungen, wie sie durch Temperaturdriften hervorgerufen werden können, führen oft zu Änderungen in der Häufigkeitsverteilung der gemessenen Pulse. Hierdurch kann sich eine Verfälschung der Messergebnisse ergeben.

DE 100 48 559 A1 beschreibt eine radiometrische Messvorrichtung zur Bestimmung und Überwachung der Dichte und/oder des Füllstands eines Mediums in einem Behälter mit Hilfe eines Strahlungsdetektors. Es ist eine Regel-/Auswerteeinheit vorgesehen, welche zumindest einen charakteristischen Bereich des Energiespektrums oder einen Teilbereich des Energiespektrums der detektierten Strahlung ermittelt und anhand dessen eine Driftstabilisierung der radiometrischen Messvorrichtung vornimmt.

### Zusammenfassung der Erfindung

Es ist eine Aufgabe der Erfindung, die Genauigkeit der Messergebnisse von radiometrischen Detektoren zu verbessern.

Es sind eine Diagnoseeinrichtung für einen radiometrischen Detektor, insbesondere für ein Füllstandmessgerät, ein Dichtemessgerät und/oder ein Durchsatzmessgerät, ein radiometrisches Füllstandmessgerät mit einer solchen Diagnoseeinrichtung, ein radiometrisches Dichtemessgerät mit einer solchen Diagnoseeinrichtung, ein radiometrisches Durchsatzmessgerät mit einer solchen Diagnoseeinrichtung sowie ein Verfahren zur Diagnose von einem radiometrischen Detektor gemäß den Merkmalen der unabhängigen Ansprüche angegeben. Weiterbildungen der Erfindung ergeben sich aus den Unteransprüchen.

Die beschriebenen Ausführungsbeispiele betreffen gleichermaßen die Diagnoseeinrichtung sowie die kompletten Messgeräte und das Verfahren. In anderen Worten können Merkmale, die im Folgenden beispielsweise im Hinblick auf die Diagnoseeinrichtung beschrieben werden, auch in den Messgeräten und in dem Verfahren implementiert werden, und umgekehrt.

Gemäß einem ersten Aspekt der Erfindung ist eine Diagnoseeinrichtung für einen radiometrischen Detektor angegeben, welche eine Amplitudenmesseinheit und eine Vergleichseinheit aufweist. Die Amplitudenmesseinheit ist zur Gewinnung von Informationen hinsichtlich der Amplituden der von dem Detektor gemessenen Pulse ausgeführt, wobei die Vergleichseinheit zum Vergleich der so gewonnenen Informationen mit Referenzwerten ausgeführt ist.

Beispielsweise wird die Amplitude jedes einzelnen Pulses eines Szintillators gemessen. Dadurch ist eine Diagnose möglich, welche die folgenden Effekte erkennen kann:
- Erhöhte Rate von Dunkelpulsen des photoempfindlichen Bauteils (Photomultiplier, Photodiode oder dergleichen);
- EMV-Einstrahlungen;
- Temperaturdrift;
- Beschädigung des Szintillators.

Somit kann eine Kompensation eventueller Messfehler schneller, genauer und sicherer durchgeführt werden.

Gemäß einem weiteren Aspekt der Erfindung ist ein radiometrisches Füllstandmessgerät mit einem radiometrischen Detektor und einer oben und im Folgenden beschriebenen Diagnoseeinrichtung angegeben.

Gemäß einem weiteren Aspekt der Erfindung ist ein radiometrisches Dichtemessgerät mit einem radiometrischen Detektor und einer oben und im Folgenden beschriebenen Diagnoseeinrichtung angegeben.

Gemäß einem weiteren Aspekt der Erfindung ist ein radiometrisches Durchsatzmessgerät mit einer oben und im Folgenden beschriebenen Diagnoseeinrichtung sowie einem radiometrischen Detektor angegeben.

Gemäß einem weiteren Aspekt der Erfindung ist ein Verfahren zur Diagnose für einen radiometrischen Detektor angegeben, durch welches Messwertverfälschungen detektiert werden können. Bei dem Verfahren werden Informationen hinsichtlich der Amplituden der von dem Detektor gemessenen Pulse gewonnen. Aus diesen gewonnenen Informationen werden dann Rückschlüsse auf Messwertverfälschungen gezogen, indem die gewonnenen Informationen mit Referenzwerten, die beispielsweise werkseitig gespeichert worden sind, verglichen werden.

Es kann als ein Kernaspekt der Erfindung angesehen werden, dass die gemessenen Pulse hinsichtlich ihrer Amplituden analysiert werden. Die so gewonnene Amplitudenverteilung wird dann mit einer Referenzverteilung verglichen, wonach dann eine Fehlerdiagnose und ggf. eine Fehlerbehebung durchgeführt werden kann. Zur Fehlerbehebung kann beispielsweise eine automatische Verschiebung der Triggerschwelle im Messwertkanal oder eine automatische Neueichung des Messgeräts durchgeführt werden.

Im Folgenden werden mit Verweis auf die Figuren Ausführungsbeispiele der Erfindung beschrieben.

### Kurze Beschreibung der Figuren

Fig. 1A zeigt ein Messgerät gemäß einem Ausführungsbeispiel der Erfindung.
Fig. 1B zeigt mögliche von dem Messgerät gemessenen Pulse.
Fig. 2 zeigt eine Amplitudenverteilung eines Szintillators, beispielsweise eines organischen Kunststoffszintillators.
Fig. 3 zeigt eine Amplitudenverteilung eines Szintillators mit einer erhöhten Häufigkeit kleiner Pulsamplituden.
Fig. 4 zeigt eine Amplitudenverteilung eines Szintillators, die hin zu kleinen Pegeln verschoben ist.
Fig. 5 zeigt eine Amplitudenverteilung eines Szintillators, bei der die großen Pulsamplituden zugenommen haben.
Fig. 6 zeigt eine Amplitudenverteilung eines Szintillators, bei der die Häufigkeit der Pulsamplituden generell erhöht ist.
Fig. 7 zeigt eine Amplitudenverteilung eines Szintillators mit einem verbreiterten Photopeak.
Fig. 8 zeigt ein Flussdiagramm eines Verfahrens gemäß einem Ausführungsbeispiel der Erfindung.
Fig. 9 zeigt ein radiometrisches Messgerät gemäß einem Ausführungsbeispiel der Erfindung.

### Detaillierte Beschreibung von Ausführungsbeispielen

Die Darstellungen in den Figuren sind schematisch und nicht maßstäblich.

In der folgenden Figurenbeschreibung werden für die gleichen oder ähnlichen Elemente die gleichen Bezugsziffern verwendet.

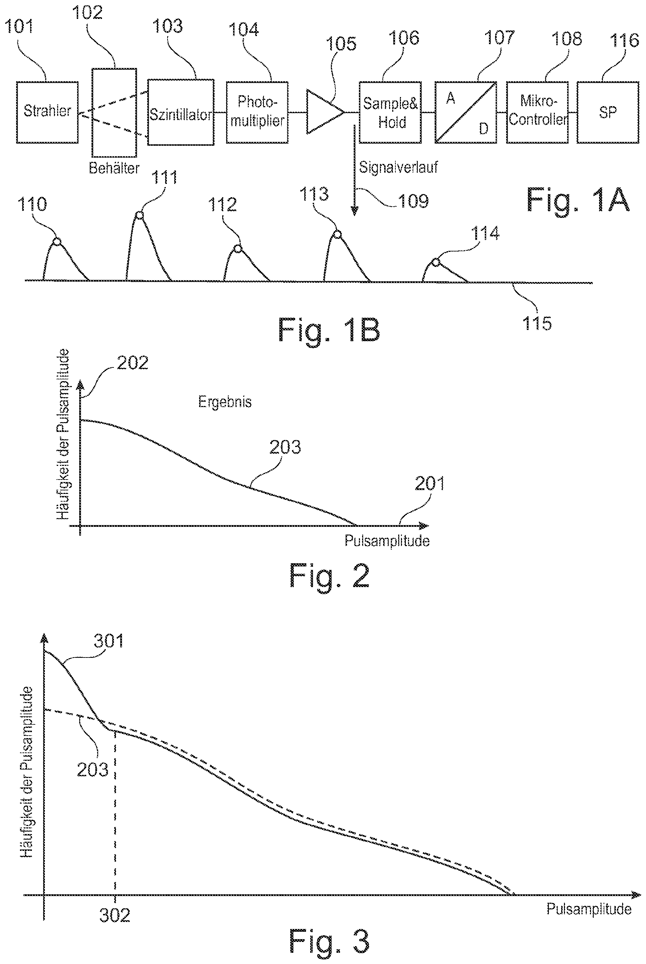

Fig. 1 zeigt ein radiometrisches Messgerät gemäß einem Ausführungsbeispiel der Erfindung. Das Messgerät, bei dem es sich beispielsweise um ein radiometrisches Füllstandmessgerät, ein radiometrisches Dichtemessgerät und/oder ein radiometrisches Durchsatzmessgerät handelt, weist einen radioaktiven Strahler 101 auf, der den Behälter 102, der beispielsweise mit einem Füllgut gefüllt ist, durchstrahlt. Hinter dem Behälter befindet sich der radiometrische Detektor, bei dem es sich um einen Szintillator 103 und einen daran angeschlossenen Photomultiplier 104 sowie einen Verstärker 105 handelt.

Der Szintillator 103 wandelt Gamma-Strahlung in Lichtpulse mit variabler Intensität um. Der Szintillationsvorgang kann durch den Comptoneffekt oder den Photoeffekt ausgelöst werden. Die Intensitätsverteilung der so entstehenden Lichtpulse ist durch das Szintillationsmaterial festgelegt und somit bekannt.

Nach dem Verstärker 105 kann der Signalverlauf der resultierenden Pulse abgegriffen und analysiert werden. Dies ist durch den Pfeil 109 symbolisiert. Im Messwertkanal befindet sich nach dem Verstärker 105 ein Sample & Hold Bauteil 106 zur Abtastung der Pulse.

Nach der Abtastung der Pulse durch das Sample & Hold Bauteil 106 erfolgt eine Analog/Digital Wandlung durch den Analog/Digital Wandler 107, der die resultierenden digitalen Signale einem Mikroprozessor 108 zuführt. Weiterhin kann eine Speichereinheit 116 vorgesehen sein, die beispielsweise an einen Mikroprozessor 108 angeschlossen ist.

Fig. 1B zeigt ein Beispiel für gemessene Pulse. Jeder der fünf Pulse weist eine Pulsamplitude 110, 111, 112, 113 bzw. 114 auf. Die Achse 115 symbolisiert den zeitlichen Verlauf.

Werden bei einem radiometrischen Messgerät zwei Komparatoren mit verschieden hohen Triggerschwellen eingesetzt, kann kontrolliert werden, ob große Pulse in erwarteter Zahl vorhanden sind. Dadurch sind zwei Punkte aus der Amplitudenverteilung der Pulse bekannt. Das erlaubt, Änderungen der Pulsamplituden zu erkennen und zu kompensieren, solange sie durch reine Verstärkungsänderungen (Temperaturdriften) hervorgerufen werden. Eine weitergehende Diagnose erfordert allerdings weitere Maßnahmen.

Fig. 2 zeigt eine typische Amplitudenverteilung eines organischen Kunststoffszintillators, bei dem vor allem der Comptoneffekt für die Szintillation verantwortlich ist. Die Achse 201 zeigt die Pulsamplitude und die Achse 202 die Häufigkeit der entsprechenden Pulsamplitude. Die Kurve 203 zeigt die Amplitudenverteilung.

Gemäß einem Ausführungsbeispiel der Erfindung kann die Diagnoseeinrichtung Informationen hinsichtlich den Amplituden der von dem Detektor gemessenen Pulse gewinnen, die dann mit werkseitig gespeicherten Referenzwerten verglichen werden.

Diese Referenzwerte entsprechen beispielsweise einer Referenzamplitudenverteilung.

Insbesondere ist es möglich, dass die gewonnenen Informationen den gemessenen Amplituden der von dem Detektor gemessenen Pulse entsprechen. Beispielsweise misst also die Diagnoseeinrichtung (bzw. das radiometrische Messgerät, welches die Diagnoseeinrichtung aufweist) die Amplitude jedes Pulses und speichert diese. Dadurch lässt sich die Amplitudenverteilung der Pulse schnell und einfach abbilden.

Insbesondere kann die Diagnoseeinrichtung ausgeführt sein, zu bestimmen, ob die Amplitude eines von dem Detektor gemessenen Pulses über einer voreingestellten Schwelle liegt. In einem einfachen Fall kann somit festgestellt werden, ob vermehrt kleine Pulsamplituden auftreten, wie dies in dem Fall der Fig. 3 gezeigt ist. Anstatt sämtliche Pulsamplituden auszuwerten, kann es in diesem Beispiel bereits ausreichen, eine Triggerschwelle an Punkt 302 zu setzen und die Pulse zu zählen, deren Pulsamplituden oberhalb der Triggerschwelle 302 liegen, und darüber hinaus diejenigen Pulse zu zählen, deren Amplituden unterhalb der Triggerschwelle 302 liegen. Die genaue Pulsamplitudenverteilung 301 muss in diesem Fall nicht gemessen werden.

Durch Vergleich der aktuellen Pulsverteilung 302 mit der beispielsweise ab Werk gespeicherten Pulsverteilung 203 ist es nun möglich, Diagnosen zu stellen. Im Übrigen ist es auch möglich, die Referenzverteilung 203 vor Ort benutzerseitig zu speichern, beispielsweise nachdem das Messgerät an seinem zugewiesenen Messort installiert wurde. Auch können verschiedene Referenzverteilungen 203 gespeichert sein, welche verschiedenen Messszenarien entsprechen. Der Benutzer kann die passende Referenzverteilung dann selber auswählen.

Eine starke Zunahme kleiner Pulsamplituden kann durch selbstgenerierte Pulse des Photomultipliers (PMT), die sog. Dunkelpulse, hervorgerufen werden. Auch elektrische Störungen, z. B. durch EMV-Einflüsse, können dies hervorrufen. Durch eine Erhöhung der Triggerschwelle des Messwertkanals können diese Pulse ausgeblendet werden. Die gemessene Zählrate verringert sich durch das Erhöhen der Triggerschwelle und damit der Messwert des Gerätes. Dies kann jedoch mit Hilfe der gespeicherten Pulsverteilung 203 kompensiert werden. Somit ist eine Messung mit eingeschränkter Genauigkeit nach wie vor möglich.

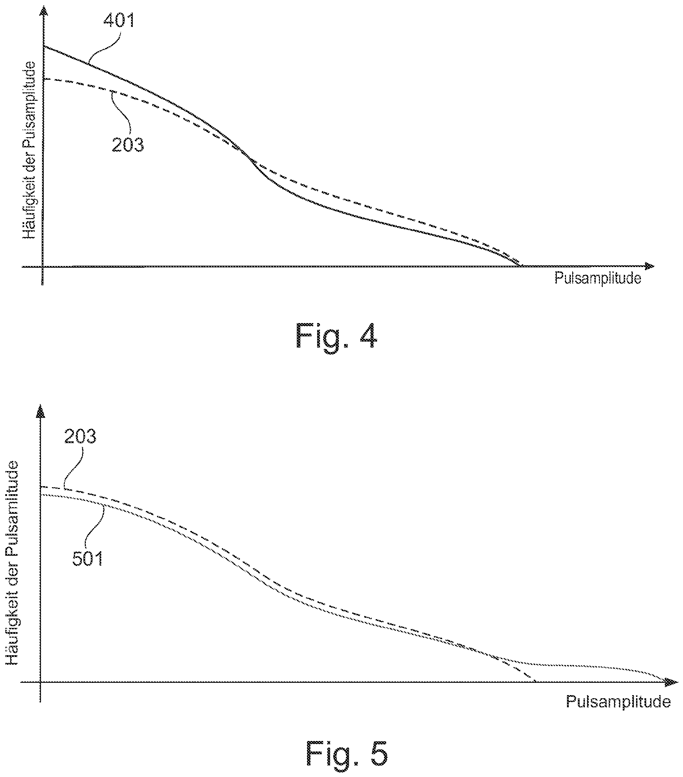

Eine generelle Verringerung der Pulsamplitude, also eine Verschiebung der Pulsamplitude hin zu kleinen Pegeln, kann durch die Alterung oder eine Beschädigung des Photomultipliers oder des Szintillators hervorgerufen werden. Eine solche Verschiebung ist in Fig. 4 gezeigt (siehe Amplitudenverteilung 401).

Da sowohl der PMT als auch viele Szintillatoren eine Temperaturabhängigkeit besitzen, kann eine generelle Verringerung der Pulsamplitude auch durch eine Veränderung der Umgebungstemperatur bewirkt werden. Das Gerät kann dieser Verringerung der Pulsamplitude entgegenwirken, indem die Verstärkung des Verstärkers 105 erhöht wird, oder indem die Verstärkung des photoempfindlichen Bauteils, z.B. Photomultiplier 104 erhöht wird. Dies kann z.B. durch Erhöhung seiner Hochspannung geschehen. Weiterhin kann die Triggerschwelle reduziert werden, um die Verringerung der Pulsamplitude zu kompensieren. Ist die Verringerung der Pulsamplitude so stark, dass sie nicht mehr durch Umgebungsbedingungen verursacht sein kann, deutet dies auf eine Alterung oder Beschädigung von Photomultiplier oder Szintillator hin. Das Gerät kann daraufhin dies mit einer Fehlermeldung anzeigen.

Fig. 5 zeigt eine Pulsamplitudenverteilung 501, bei der die Häufigkeit großer Pulsamplituden im Vergleich zur Referenzverteilung 203 erhöht ist. Eine Zunahme großer Pulsamplituden kann durch eine Erhöhung der Hintergrundstrahlung entstehen, wenn die Hintergrundstrahlung energiereiche Gamma-Strahlung enthält. Dieser Effekt kann verringert werden, indem die großen Signalpegel nicht zur Messung verwendet werden bzw. indem die Anzahl der großen Pegel von der Gesamtzahl subtrahiert wird. In anderen Worten können die Pulse mit großen Pulsamplituden verworfen bzw. gelöscht werden.

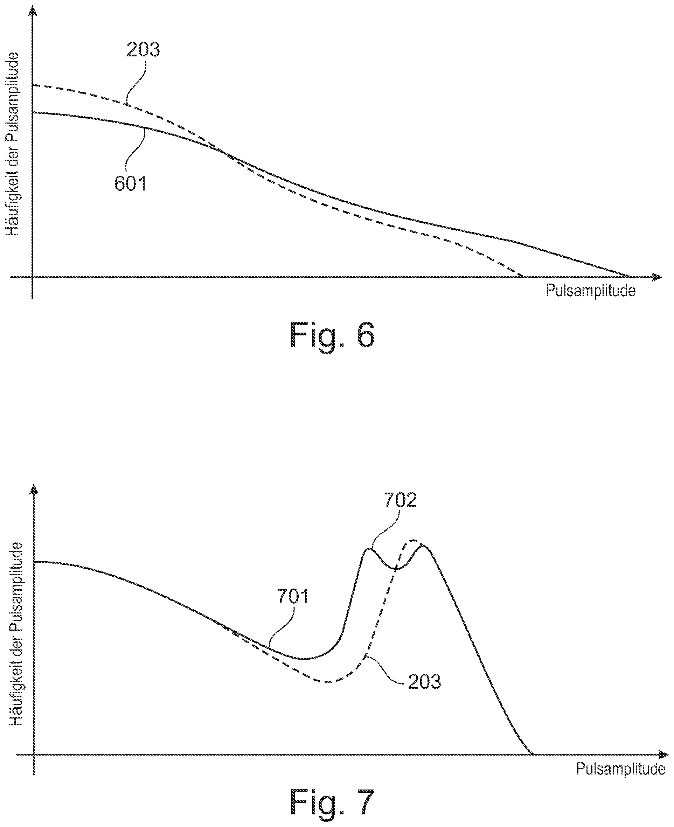

Fig. 6 zeigt eine Pulsamplitudenverteilung 601, bei der die Pulsamplituden generell erhöht sind. Eine generelle Erhöhung der Pulsamplitude kann in geringem Maße durch eine Veränderung der Umgebungstemperatur hervorgerufen werden, da der Photomultiplayer bzw. die Photodiode und viele Szintillatoren eine Temperaturabhängigkeit besitzen. Große Veränderungen deuten auf einen Defekt der Elektronik hin. Durch eine unkontrollierte Erhöhung der Spannungsversorgung für den Photomultiplier bzw. die Photodiode kann die Pulsamplitude generell größer werden. Das Gerät kann dieser Erhöhung der Pulsamplitude entgegenwirken, indem die Verstärkung des Verstärkers 105 verringert wird, oder indem die Verstärkung des photoempfindlichen Bauteils, z.B. Photomultiplier 104 verringert wird. Dies kann z.B. durch Verringerung seiner Hochspannung geschehen. Weiterhin kann die Triggerschwelle erhöht werden, um die Erhöhung der Pulsamplitude zu kompensieren. Ist die Erhöhung der Pulsamplitude so stark, dass sie nicht mehr durch Umgebungsbedingungen verursacht sein kann, deutet dies auf eine Beschädigung der Elektronik hin. Das Gerät kann daraufhin dies mit einer Fehlermeldung anzeigen.

Fig. 7 zeigt eine Pulsamplitudenverteilung 701, bei der der sog. Photopeak 702 im Vergleich zu der Referenzkurve 203 verbreitert ist. Viele anorganische Szintillatoren, die z. B. NaJ enthalten, produzieren mit verhältnismäßig großer Häufigkeit große Pulsamplituden. Dieser sog. Photopeak entsteht durch den Photoeffekt, bei dem Gammaquanten ihre komplette Energie an das Szintillatormaterial abgeben. Eine deutliche Verbreiterung des Photopeaks tritt auf, wenn der Szintillator beschädigt ist. Dies kann z. B. durch thermischen Schock geschehen, bei dem das Szintillatormaterial brechen kann.

Wird eine Verbreiterung des Photopeaks detektiert, kann beispielsweise nachgeeicht werden. Ist die Verbreiterung sehr stark deutet das auf einen Defekt des Szintillators hin. Das Gerät kann daraufhin dies mit einer Fehlermeldung anzeigen.

Es ist zu beachten, dass das Messgerät so ausgelegt sein kann, dass die Vermessung der Pulse und die folgende Auswertung der Pulsamplituden durch Vergleich mit den Referenzwerten in vorgebbaren zeitlichen Abständen erfolgt, beispielsweise wöchentlich oder täglich. Auch kann eine solche Diagnose durch bestimmte Ereignisse getriggert werden, beispielsweise durch eine starke Temperaturschwankung oder eine sonstige starke Änderung der Messumgebung.

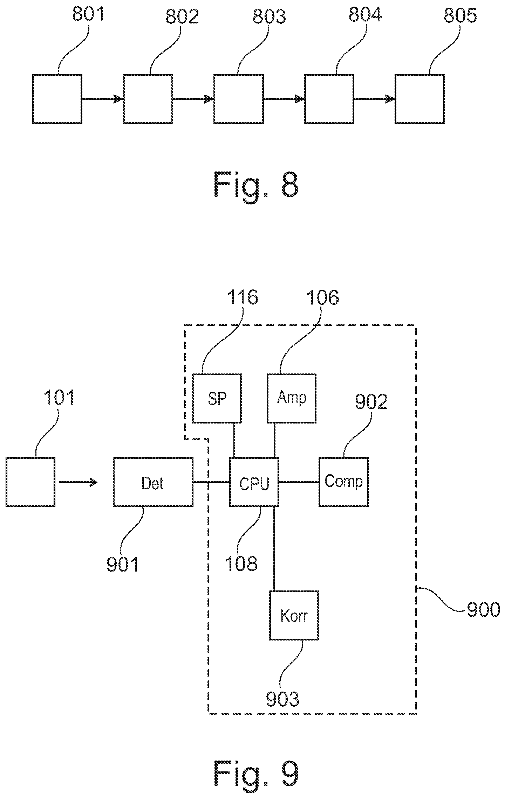

Fig. 8 zeigt ein Flussdiagramm eines Verfahrens gemäß einem Ausführungsbeispiel der Erfindung. In Schritt 801 werden Gammaquanten von der radioaktiven Quelle 101 in Richtung Behälter ausgestrahlt. In Schritt 802 treffen diese Gammaquanten auf einen Szintillator und werden in Lichtblitze umgewandelt, die von einem Photomultiplier in elektrische Pulse umgewandelt werden. In Schritt 803 werden die Amplituden dieser Pulse vermessen und in Schritt 804 mit einer Referenzpulsamplitudenverteilung verglichen. Dies erfolgt beispielsweise in einer Vergleichseinheit. In Schritt 805 kann eine Korrektur der Messdaten bzw. eine Neueichung des Messgeräts erfolgen. Hierfür ist eine Korrektureinheit vorgesehen.

Fig. 9 zeigt ein radiometrisches Messgerät mit einer Quelle 101, einem Detektor 901 sowie eine Diagnoseeinrichtung 900. Die Diagnoseeinrichtung 900 weist eine Recheneinheit 108 auf. An die Steuereinheit 108 ist eine Speichereinheit 116 angeschlossen, auf welcher die gemessenen Amplituden sowie die Referenzverteilung gespeichert sind. Weiterhin ist eine Amplitudenmesseinheit 106, eine Vergleichseinheit 902 sowie eine Korrektureinheit 903 vorgesehen, welche ebenfalls an die Steuereinheit 108 angeschlossen sind.

Die Vergleichseinheit 902 dient dem Erzeugen von Diagnosedaten auf Basis des von der Vergleichseinheit vorgenommenen Vergleichs mit den Referenzwerten. Mit Hilfe der erzeugten Diagnosedaten ist es möglich, dass die Korrektureinheit 903 die Messergebnisse des Detektors 901 verbessert, beispielsweise indem eine Triggerschwelle des Messwertkanals des Detektors erhöht wird. Auch ist es möglich, dass Pulse mit einer Signalamplitude, die über einem voreingestellten Schwellwert liegt, verworfen oder subtrahiert werden. Ebenso ist es möglich, dass eine Neueichung des Detektors auf Basis des Vergleichs durchgeführt wird.

Der radiometrische Sensor 901, 900 kann zum Detektieren der radioaktiven Strahlung einen Szintillator verwenden, mit anschließendem Photomultiplier oder einer Photodiode. Mit Hilfe der Diagnoseeinrichtung 900 sind auch Diagnosen an Geiger-Müller-Zählrohren möglich.

Es ist zu beachten, dass die unterschiedlichen Bauteile (die Steuerung 108, die Amplitudenmesseinheit 106, die Vergleichseinheit 902 und/oder die Korrektureinheit 903) auch in einem Modul (beispielsweise der CPU 108) zusammengefasst sein können.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Diagnoseeinrichtung für einen radiometrischen Detektor zur Anzeige einer Fehlermeldung, wenn eine Beschädigung eines Photomultipliers, eines Szintillators oder einer Elektronik des radiometrischen Detektors erkannt wird, die Diagnoseeinrichtung aufweisend:
eine Amplitudenmesseinheit (106) zur Gewinnung von Informationen hinsichtlich Amplituden der von dem Detektor gemessenen Pulse, wobei die gewonnenen Informationen einer gemessenen Pulsamplitudenverteilung (301, 401, 501, 601, 701) der von dem Detektor gemessenen Pulse entsprechen;
eine Vergleichseinheit (108, 902) zum Vergleich der gewonnenen Informationen mit Referenzwerten, wobei die Referenzwerte einer Referenzamplitudenverteilung (203) entsprechen;
wobei die Diagnoseeinrichtung ausgeführt ist,
bei einer generellen Verringerung der Pulsamplituden eine Alterung oder Beschädigung des Photomultipliers oder des Szintillators mit einer Fehlermeldung anzuzeigen, und/oder
bei einer generellen Erhöhung der Pulsamplituden eine Beschädigung der Elektronik des radiometrischen Detektors mit einer Fehlermeldung anzuzeigen, und/oder
bei einer Verbreiterung des Photopeaks einen Defekt des Szintillators mit einer Fehlermeldung anzuzeigen.

2. Diagnoseeinrichtung nach Anspruch 1,
wobei die Amplitudenmesseinheit (106) zur Bestimmung der Amplitude jedes von dem Detektor gemessenen Pulses ausgeführt ist.

3. Diagnoseeinrichtung nach einem der vorhergehenden Ansprüche,
wobei die Amplitudenmesseinheit (106) zur Bestimmung, ob die Amplitude eines von dem Detektor gemessenen Pulses über einer voreingestellten Schwelle liegt, ausgeführt ist.

4. Diagnoseeinrichtung nach einem der vorhergehenden Ansprüche, weiterhin aufweisend:
eine Speichereinheit (116) zur Speicherung der Referenzwerte.

5. Diagnoseeinrichtung nach einem der vorhergehenden Ansprüche, weiterhin aufweisend:
eine Korrektureinheit (108, 903); wobei die Vergleichseinheit (108, 902) zum Erzeugen von Diagnosedaten auf Basis des von der Vergleichseinheit (108, 902) vorgenommenen Vergleichs ausgeführt ist; und
wobei die Korrektureinheit (108, 903) zur Verbesserung eines Messergebnisses des Detektors auf Basis der Diagnosedaten ausgeführt ist.

6. Diagnoseeinrichtung nach Anspruch 5,
wobei die Korrektureinheit (108, 903) zur Veränderung einer Triggerschwelle eines Messwertkanals des Detektors ausgeführt ist.

7. Diagnoseeinrichtung nach Anspruch 5 oder 6,
wobei die Korrektureinheit (108, 903) zur Verwerfung von Pulsen mit einer Signalamplitude, die über einem voreingestellten Schwellwert liegt, ausgeführt ist.

8. Diagnoseeinrichtung nach einem der Ansprüche 5 bis 7,
wobei die Korrektureinheit (108, 903) zur Durchführung einer Neueichung des Detektors ausgeführt ist.

9. Radiometrisches Füllstandmessgerät, aufweisend:
einen radiometrischen Detektor (103, 104);
eine Diagnoseeinrichtung (900) nach einem der Ansprüche 1 bis 8.

10. Radiometrisches Dichtemessgerät, aufweisend:
einen radiometrischen Detektor (103, 104);
eine Diagnoseeinrichtung (900) nach einem der Ansprüche 1 bis 8.

11. Radiometrisches Durchsatzmessgerät, aufweisend:
einen radiometrischen Detektor (103, 104);
eine Diagnoseeinrichtung (900) nach einem der Ansprüche 1 bis 8.

12. Verfahren zur Diagnose von einem radiometrischen Detektor, das Verfahren aufweisend die Schritte:
Gewinnen von Informationen hinsichtlich Amplituden der von dem Detektor gemessenen Pulse, wobei die gewonnenen Informationen einer gemessenen Pulsamplitudenverteilung der von dem Detektor gemessenen Pulse entsprechen;
Vergleichen der gewonnenen Informationen mit Referenzwerten, wobei die Referenzwerte einer Referenzamplitudenverteilung entsprechen;
Durchführung einer Fehlerdiagnose, durch welche eine erhöhte Rate an Dunkelpulsen, EMV-Einstrahlungen, eine temperaturdrift und eine Beschädigung eines Szintillators der Amplitudenmesseinheit erkannt werden können;
Anzeige einer Alterung oder Beschädigung des Photomultipliers oder des Szintillators bei einer generellen Verringerung der Pulsamplituden mit einer Fehlermeldung, und/oder
Anzeige einer Beschädigung der Elektronik des radiometrischen Detektors bei einer generellen Erhöhung der Pulsamplituden mit einer Fehlermeldung, und/oder Anzeige eines Defekts des Szintillators bei einer Verbreiterung des Photopeaks mit einer Fehlermeldung.

13. Verfahren nach Anspruch 12,
Erzeugen von Diagnosedaten auf Basis des von einer Vergleichseinheit (108) vorgenommenen Vergleichs; und
Verbesserung eines Messergebnisses des Detektors auf Basis der Diagnosedaten.

## Claims

1. A diagnostic device for a radiometric detector for reporting an error message, when a damage of a photo multiplier, a Szintillator or an electronics of the radiometric detector is detected, the diagnostic device comprising:
an amplitude measuring unit (106) for obtaining information relating to amplitudes of the pulses measured by the detector, wherein the obtained information corresponds to a measured pulse amplitude distribution (301, 401, 501, 601, 701) of the pulses measured by the detector;
a comparator unit (108, 902) for comparing the obtained information with reference values, wherein the reference values correspond to a reference amplitude distribution (203);
wherein the diagnostic device is adapted,
to report an ageing or damage of the photo multiplier or scintillator with an error message, if the pulse amplitudes generally decrease; and/or
to report a damage of the electronics of the radiometric detector with an error message, if the pulse amplitudes generally increase; and/or
to report a defect of the scintillator with an error message, if.
the photo peak is broadened.

2. The diagnostic device according to any one of the preceding claims,
wherein the amplitude measuring unit (106) is designed to determine the amplitude of each pulse measured by the detector.

3. The diagnostic device according to any one of the preceding claims,
wherein the amplitude measuring unit (106) is designed to determine whether the amplitude of a pulse measured by the detector is above a preset threshold.

4. The diagnostic device according to any one of the preceding claims, further comprising:
a storage unit (116) for storing the reference values.

5. The diagnostic device according to any one of the preceding claims, further comprising:
a correction unit (108, 903);
wherein the comparator unit (108, 902) is designed to generate diagnostic data on the basis of the comparison, carried out by the comparator unit (108, 902); and
wherein the correction unit (108, 903) is designed to correct a measurement result of the detector on the basis of the diagnostic data.

6. The diagnostic device according to claim 5,
wherein the correction unit (108, 903) is designed to change a trigger threshold of a measured-value channel of the detector.

7. The diagnostic device according to claim 5 or 6,
wherein the correction unit (108, 903) is designed to reject pulses with a signal amplitude above a pre-set threshold value.

8. The diagnostic device according to any one of claims 7 to 9,
wherein the correction unit (108, 903) is designed to recalibrate the detector.

9. A radiometric fill-level measuring device, comprising:
a radiometric detector (103, 104);
a diagnostic device (900) according to any one of claims 1 to 8.

10. A radiometric density measuring device, comprising:
a radiometric detector (103, 104);
a diagnostic device (900) according to any one of claims 1 to 8.

11. A radiometric throughput measuring device, comprising:
a radiometric detector (103, 104);
a diagnostic device (900) according to any one of claims 1 to 8.

12. A method for diagnosing a radiometric detector, with the method comprising the steps of:
obtaining information relating to amplitudes of the pulses measured by the detector, wherein the obtained information corresponds to a measured pulse amplitude distribution of the pulses measured by the detector;
comparing the obtained information with reference values, wherein the reference values correspond to a reference amplitude distribution (203);
performing an error diagnosis, by which an increased rate of dark pulses, EMV-radiation, a temperature drift and a damage of the scintillator of the amplitude measuring unit can be detected;
reporting an ageing or a damage of the photo multiplier or scintillator with an error message, if the pulse amplitudes generally decrease;
reporting a damage of the electronics of the radiometric detector with an error message, if the pulse amplitudes generally increase; and/or
reporting a defect of the scintillator with an error message, if.
the photo peak is broadened.

13. The method according to claim 12, comprising:
generating diagnostic data on the basis of the comparison carried out by a comparator unit (108); and
correcting a measurement result of the detector on the basis of the diagnostic data.

## Revendications

1. Dispositif de diagnostic pour un détecteur radiométrique destiné à l'affichage d'un message d'erreur, lorsqu'une détérioration d'un photomultiplicateur, d'un scintillateur ou d'une électronique du détecteur radiométrique est identifiée, le dispositif de diagnostic comprenant :
une unité de mesure d'amplitude (106) pour l'obtention d'informations afférentes aux amplitudes des impulsions mesurées par le détecteur, les informations acquises correspondant à une distribution mesurée d'amplitudes d'impulsions (301, 401, 501, 601, 701)
des impulsions mesurées par le détecteur ;
une unité comparatrice (108,902) pour comparer les informations acquises avec des valeurs de référence, les valeurs de référence correspondant à une distribution d'amplitudes de référence (203) ;
le dispositif de diagnostic étant réalisé
pour afficher par un message d'erreur, en présence d'une baisse générale des amplitudes d'impulsions, une altération ou une détérioration du photomultiplicateur ou du scintillateur, et/ou
pour afficher par un message d'erreur, en présence d'une hausse générale des amplitudes d'impulsions, une détérioration de l'électronique du détecteur radiométrique, et/ou
pour afficher par un message d'erreur, en présence d'un élargissement du pic photoélectrique, un défaut du scintillateur.

2. Dispositif de diagnostic selon la revendication 1,
l'unité de mesure d'amplitude (106) étant réalisée pour déterminer l'amplitude de chaque impulsion mesurée par le détecteur.

3. Dispositif de diagnostic selon l'une des revendications précédentes,
l'unité de mesure d'amplitude (106) étant réalisée pour déterminer si l'amplitude d'une impulsion mesurée par le détecteur se situe au-dessus d'un seuil préréglé.

4. Dispositif de diagnostic selon l'une des revendications précédentes, comprenant en outre :
une unité de mémorisation (116) pour mémoriser les valeurs de référence.

5. Dispositif de diagnostic selon l'une des revendications précédentes, comprenant en outre :
une unité correctrice (108, 903) ;
l'unité comparatrice (108, 902) étant réalisée pour générer des données de diagnostic sur la base de la comparaison assurée par l'unité comparatrice (108, 902) ; et
l'unité correctrice (108, 903) étant réalisée pour améliorer un résultat de mesure du détecteur sur la base des données de diagnostic.

6. Dispositif de diagnostic selon la revendication 5,
l'unité correctrice (108, 903) étant réalisée pour modifier un seuil de déclenchement d'un canal de mesure du détecteur.

7. Dispositif de diagnostic selon la revendication 5 ou 6,
l'unité correctrice (108, 903) étant réalisée pour le rejet d'impulsions avec une amplitude de signal qui se situe au-dessus d'une valeur de seuil préréglée.

8. Dispositif de diagnostic selon l'une des revendications 5 à 7,
l'unité correctrice (108, 903) étant réalisée pour la mise en oeuvre d'un nouvel étalonnage du détecteur.

9. Appareil radiométrique de mesure de niveau, comprenant :
un détecteur radiométrique (103, 104) ;
un dispositif de diagnostic (900) selon l'une des revendications 1 à 8.

10. Appareil radiométrique de mesure de densité, comprenant :
un détecteur radiométrique (103, 104) ;
un dispositif de diagnostic (900) selon l'une des revendications 1 à 8.

11. Appareil radiométrique de mesure de débit, comprenant :
un détecteur radiométrique (103, 104) ;
un dispositif de diagnostic (900) selon l'une des revendications 1 à 8.

12. Procédé de diagnostic par un détecteur radiométrique, le procédé comprenant les étapes :
obtention d'informations afférentes aux amplitudes des impulsions mesurées par le détecteur, les informations acquises correspondant à une distribution mesurée d'amplitudes d'impulsions des impulsions mesurées par le détecteur ;
comparaison des informations acquises à des valeurs de référence, les valeurs de référence correspondant à une distribution d'amplitudes de référence ;
mise en oeuvre d'un diagnostic d'erreur, par lequel peuvent être identifiés un taux accru d'impulsions sombres, des radiations EMV, une dérive de température et une détérioration d'un scintillateur de l'unité de mesure d'amplitudes ;
affichage par un message d'erreur d'une altération ou d'une détérioration du photomultiplicateur ou du scintillateur en présence d'une baisse générale des amplitudes d'impulsions, et/ou
affichage par un message d'erreur d'une détérioration de l'électronique du détecteur radiométrique en présence d'une hausse générale des amplitudes d'impulsions, et/ou
affichage par un message d'erreur d'un défaut du scintillateur en présence d'un élargissement du pic photoélectrique.

13. Procédé selon la revendication 12,
génération de données de diagnostic sur la base de la comparaison assurée par une unité comparatrice (108) ; et
amélioration d'un résultat de mesure du détecteur sur la base des données de diagnostic.
